# EUROPEAN PATENT APPLICATION

(11) **EP 0 869 433 A2**
(43) Date of publication of application: **07.10.1998**
(21) Application number: 98302487.8
(22) Date of filing: 31.03.1998
(51) Int. Cl.: G06F 11/00

(54) **A test development system and method for software with a graphical user interface**

(30) Priority: 31.03.1997 US 829259
(71) Applicant: SIEMENS CORPORATE RESEARCH, INC., Princeton, New Jersey 08540 (US)
(72) Inventor: Anodide, Aaron, Pt. Pleasant, NJ 08742 (US); Goradia, Tarak, Monmouth Jct., NJ 08852 (US); Foster, Herbert R., Jr., Princeton, NJ 08540 (US); Ostrand, Thomas J., Metuchen, NJ 08840 (US)
(74) Representative: Litchfield, Laura Marie

(57) **Abstract**

An integrated, visual test design system and method for graphical user interface (GUI) software links a test designer, a test design library, and a test generation engine with a standard commercial capture/replay tool. The system's components provide a human tester the capabilities to capture sequences of interactions with the software under test (SUT), to visually manipulate and modify the sequences, and to create test designs that represent multiple individual test sequences. These features are supported through an interface that gives the tester access to a user model of the SUT, with simulations of the windows of the software's GUI, and that displays graphical representations of recorded test sequences and test designs.

## Description

The present invention relates to a method and apparatus for the computerized generation of test programs for testing a user interface and, more particularly, for testing graphical user interface (GUI) software.

In a computerized system such as, for example, an airline reservation system, the graphical user interface is a kind of buffer between a user and the underlying system that does the work, such as making airline reservations, issuing tickets and so forth. Thus, the graphical interface is what the operator, in this example an airline agent or ticket agent, sees on the screen in order to operate the airline reservation system.

Testing the graphical user interface involves (1) testing that the functions of the underlying application work correctly, such as in the present example, issuing correct tickets and sending flights to the right places, and (2) testing that the graphical display of all of that information is correct so that the user sees things in the right places on the screen and that when numbers are entered into the interface that the correct number goes into the application, that windows are put up in the right places and that they appear at the right time and so forth.

One of the main problems in testing such systems results from the typically large number of possible ways to operate the system. Typically, there are a large number of different paths through the system that represent correct use of the system. Basically, testing must ensure that all of those paths work correctly; that is, it should ensure that the system will respond properly to any form of input stimulus. One of the biggest problems in testing is constructing enough test cases to be able to at least examine the operation of all these different possible ways.

Completely exhaustive testing of all modes is not feasible because there are too many possibilities. However, thorough testing is essential, yet the sheer magnitude of the job can be overwhelming. It is nevertheless desirable to come as close to that as may be practicable. Among various known strategies, typically, an attempt is made to group together similar kinds of operations and have a smaller number of representative tests that stand for essentially similar ways of using the system.

While there exist various strategies to generate and to group together similar paths through a system, the present invention is useful generally without regard to the particular strategy intended to be used but rather is more concerned with facilitating the task of carrying out such operations. Given the existence of a viable strategy, there is still a need for an efficient way to execute or carry out the strategy. It is desirable to have a way to efficiently be able to design test cases and be able to readily make variations in a test script, so as to produce a slight change in the test script when that slight change may result in a substantially different test case.

The current state of the art method for testing GUIs uses capture/replay tools, which permit the tester to record, and later play back, sequences of actions on the interface. The operator is enabled to work with a graphical interface and capture certain samples of executions and certain samples of using the interface. Such tools will typically capture the uses of the interface, they will store them, will store representations of those uses, and then allow the operator to replay those uses as test cases. Typically, such tools also enable viewing of the captured representations and the making of changes to the captured representations, so that variations can be created using the existing commercial tools. However, making such changes utilizing existing commercial tools is a very cumbersome task.

The chief benefit of these tools is that they relieve the tester from the task of explicitly describing the desired sequences of actions to be performed; the sequences are defined by actually performing them. When the actions are carried out, the sequences are recorded in a test script language, usually proprietary for each individual tool. Moreover, such a proprietary language is usually a more or less obscure programming language which will be different from case to case. The operator requires a working knowledge of such a language and of how to manipulate it for implementing changes. Making such changes is akin to writing code, that is, like writing programs, so that it is not a facile task.

Furthermore, with typical existing commercial tools, the verification of changes which have been made requires that the operator run the test and note the results.

In the current state of the art for testing GUIs, an advantage of such record/replay tools which permit the tester to record, and later play back, sequences of actions on the interface, is that they relieve the tester of the task of explicitly describing the desired sequences of actions to be performed; the sequences are defined by actually performing them. At the time the actions are carried out, the sequences are recorded in the test script language.

However, this advantage raises a concomitant drawback: only a single sequence of actions can be recorded at one time. To create 500 test scripts, the tester must either record 500 different interactions with the system being tested, or else record fewer scripts and then create multiple modifications by editing the recorded scripts in the proprietary language. The first alternative is extremely labor-intensive and time-consuming, while the second requires detailed knowledge of the syntax and semantics of the scripting language, and is also time-consuming.

Another problem with the scripts recorded by a record/replay tool is keeping them current as the tested application changes. While some record/replay tools can handle certain simple kinds of changes to the tested system, changes in the layout of the interface may invalidate many existing test scripts, and require the tester either to edit the scripts, or to redevelop a new set of scripts from scratch.

As explained above, the standard available commercial technology for testing software with GUI is the capture-replay tool. The key functions of these tools are to capture information about the structure of a system's GUI, to record and store sequences of user interactions with the system, and to re-execute the recorded sequences on demand. As noted earlier, they offer either no or only rudimentary test generation capabilities. Existing capture/replay tools include QA Partner, SQA Robot, and XRunner/WinRunner.

A somewhat different approach is utilized in a prior art tool the Teradyne TestMaster, which is not a capture/replay tool. TestMaster is a visual tool suite for modeling an SUT (software under test) and generating executable test cases. The tester constructs an extended finite state machine model of the system being tested.

The test generator portion of Testmaster creates test cases based on paths through the state model. The tester can specify the coverage scheme used to generate the tests, and can define constraints that limit the number and the form of the generated tests. The TestMaster system model is an abstraction of the real system's behavior: the generated tests are black-box or functional tests. The concepts of coverage used by the TestMaster test generator are applied to transitions and paths in the system state model, instead of to transitions and paths in the code.

It is herein recognized that the TestMaster system and the TDE (Test Development Environment) exhibit certain parallels such as, for example, that both utilize visual models and both allow the user to place constraints on the test generation process. However, the systems differ in other respects. For example, in the TestMaster system the system model is in the form of an extended finite state machine whereas in TDE is a user model; in the TestMaster system, the model is constructed entirely by the user whereas in the TDE, it is constructed mainly by the TDE, with some help from the user; and the in TestMaster system, tests are generated by TestMaster, based on model and coverage criteria whereas in TDE the test design is built by the tester and actual tests are generated by TDE Test Generation Engine.

As helpful background material, the following are cited: TDE: Test Development Environment for
Cost-effective Testing of Software with Graphical User Interfaces, Siemens Corporate Research, Inc., Princeton, U.S.A., November 1996.
TSL User Guide and Reference Manual Version 2.2.1, Siemens Corporate Research,1994.
QA Partner and QA Planner User's Guide, Segue Software, Inc., Newton Centre, MA 1996.
SQA Robot, http://www.sqa.com/product/suite.html, SQA Inc., Burlington, MA.
Mercury Interactive Home Page, http://www.merc-int.com/, Mercury Interactive Corporation, Sunnyvale, CA. TestMaster Home Page,
http://www.teradyne.com/sst/tm_main.html#testmaster, Teradyne Software and Systems Test Product Center, Teradyne Corp.

The present invention provides an integrated, visual test design environment for graphical user interface (GUI) software. The invention links a test designer, a test design library, and a test generation engine with a standard commercial capture/replay tool. The invention's components provide a human tester the capabilities to capture sequences of interactions with the software under test (SUT), to visually manipulate and modify the sequences, and to create test designs that represent multiple individual test sequences. These features are supported through an interface that gives the tester access to a user model of the SUT, with simulations of the windows of the software's GUI, and that displays graphical representations of recorded test sequences and test designs.

It is an object of the present invention to provide a powerful productivity tool that significantly lowers the cost of testing software with graphical interfaces. It is another object of the present invention to integrate TDE with a standard record/replay tool, so as to make it cost-effective to develop comprehensive automated tests and to update them when the interface changes.

It is another object of the present invention to enable a user to create large quantities of tests for graphical user interface (GUI) software with a small fraction of the effort formerly required. TDE allows the tester to work with test descriptions at a high level, to build additional tests out of parts of existing tests, to construct new tests by interacting with the software, and to see how thoroughly a test suite exercises all aspects of the software's interface. TDE also simplifies the updating of large quantities of test scripts.

It is another object of the present invention to employ a Record/Replay tool to capture basic information about the GUI of the software under test. The tester records an initial set of test scripts by interacting with the software under test. TDE's test designer module makes the recorded scripts available for visual editing and provides access to a library of possible variations of gui operations and input data. Using a visual interface, the tester specifies how to vary the test scripts and their associated data. After the test design is completed, TDE's test generator module processes the test design and produces a large number of test scripts in the language of a record/replay tool. The generated tests can be automatically executed to exercise desired variations. A wide range of capabilities is available for refining test scenarios and for controlling the number and coverage of the generated test scripts. TDE also gives access to the features of the underlying record/replay tool, including validation of test results.

In accordance with another aspect of the present invention an intermediate layer is provided between the tester and a standard commercial capture/replay tool; it greatly expands the functionality and usefulness of the tool. It provides the tester with a visual representation of captured action sequences, a set of easy to use techniques for manipulating the sequences and creating new sequences, and the ability to convert sequences to test specifications that can be processed by a test generation engine.
In accordance with an aspect of the invention, an integrated visual test design method for graphical user interface (GUI) software, for linking a test designer, a test design library, and a test generation engine with a capture/replay tool, comprises the steps of capturing sequences of user/system interactions with software under test; visually manipulating the sequences; creating test designs that represent multiple individual test sequences; simulating windows of the software's GUI; displaying the windows on an interface; and displaying graphical representations of recorded test sequences and test designs.

In accordance with another aspect of the invention, the step of manipulating the sequences comprises converting the sequences into *Scenario Path Expressions,* displaying the *Scenario Path Expressions* for editing, and editing.

In accordance with another aspect of the invention, the step of capturing sequences of interactions with software under test comprises the steps of starting the graphical user interface (GUI) software; starting the capture/replay tool; and sequentially opening and closing the windows.

In accordance with another aspect of the invention, an integrated visual test design method for graphical user interface (GUI) software, for creating a defined test development environment for linking a test designer, a test design library, and a test generation engine with a capture/replay tool, comprises the steps of capturing graphical user interface information; transforming captured user interface information into a representation suitable for the test development environment; storing a record of user/system interactions; and transforming the record of user/system interactions into *Scenario Path Expressions.*

In accordance with another aspect of the invention, the step of capturing capturing graphical user interface information comprises the steps of starting the graphical user interface (GUI) software; starting the capture/replay tool; determing characteristics of windows of the software; and storing the characteristics.

The invention will be more completely understood from the following detailed description in conjunction with the Drawing, in which
Figure 1 diagrammatically shows TDE components and information flow in accordance with the principles of the invention;
Figure 2 diagrammatically shows the TDE Information Capture Phase;
Figure 3 diagrammatically shows TDE Design/Edit Phase in accordance with the principles of the invention;

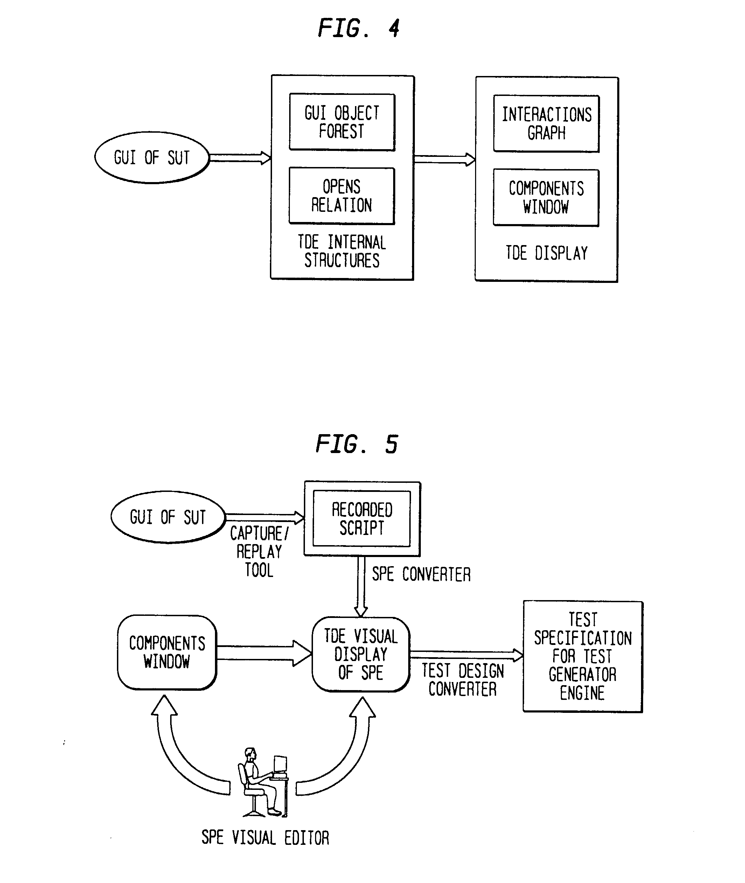

Figure 4 diagrammatically shows steps in constructing TDE display in accordance with the principles of the invention;
Figure 5 diagrammatically shows steps in SPE *(scenario path expression)* processing in accordance with the principles of the invention;
Figure 6 shows a TDE representation of SUT for an embodiment in accordance with the principles of the invention;
Figure 7 shows a TDE Test Manager for an embodiment in accordance with the principles of the invention;
Figure 8 shows a Data Variations window for an embodiment in accordance with the principles of the invention;
Figure 9 shows a Test Coverage Display on the Text Editor for an embodiment in accordance with the principles of the invention; and
Figure 10 shows another example of a TDE Test Manager for an embodiment in accordance with the principles of the invention.

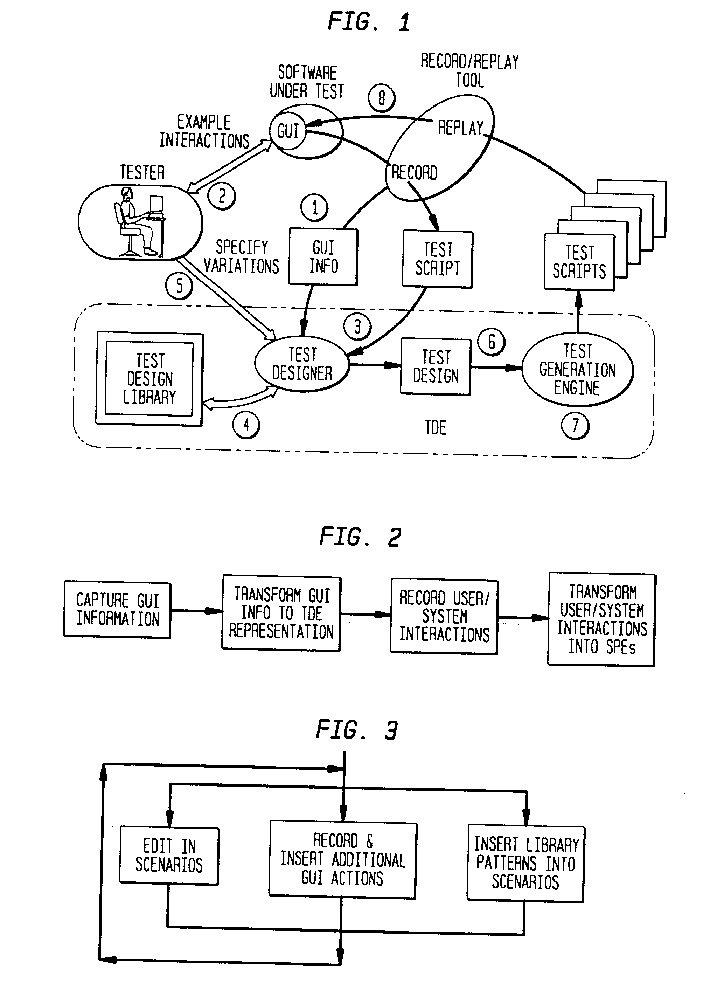

The invention will next be described in detail by way of an exemplary embodiment, showing the best mode. Figure 1 shows the main components of the TDE system, their interaction with the SUT and a Record/Replay tool, and the main steps that occur during use of TDE. Initially, the capture/replay tool captures basic information (1) about the GUI of the software under test. The tester then records an initial set of test scripts by interacting with the software (2). TDE's *test designer* module makes the recorded scripts available for visual editing (3) and provides access to a library (4) of possible variations of GUI operations and input data. Using a visual interface, the tester specifies how to vary the test scripts and their associated data (5). After the test design is completed, TDE's *test generator module* processes the test design (6) and produces a large number of test scripts (7) in the language of the record/replay tool. The generated tests can be supplied to the capture/replay tool, which will execute them on the SUT (8). A wide range of capabilities is available for refining test scenarios and for controlling the number and coverage of the generated test scripts. TDE also gives access to the features of the underlying record/replay tool, including validation of test results.

TDE represents sequences of user actions with formulas called *Scenario Path Expressions* (SPEs). SPEs obey a simple grammar whose basic constructs are *single* *actions, action sequences, repeats,* and *alternatives.* In general, an SPE represents a set of sequences of operations that a user would carry out on the system's GUI. A collection of SPEs produced for a GUI is referred to as a *test design.*

TDE contains a *visual editing system* for SPEs, with the following features:
SPEs are displayed in an entirely visual form to the tester, who can cut, paste, and copy in them, as well as insert new instances of the basic SPE constructs.
TDE permits definition of a *data variation object* for specifying the possible data values for a GUI operation. A data variation object takes on one of several values, which themselves may contain other data variation objects. An individual data variation object may be referenced by several GUI operations, in several SPEs.
SPEs can also contain *preconditions,* which specify boundary conditions on the test cases that will be generated from the SPE, and *constraints,* which are restrictions on how different parts of the SPE can be combined to form test cases. Both preconditions and constraints are used to limit the number of test cases that are generated from an SPE.

The SPE editor is *visually integrated* with the application being tested. User actions on the application can be inserted into any SPE merely by performing the actions on a TDE representation of the application.

The SPE format of a test design is *independent* of both the specific capture/replay tool used and the specific test generator engine, making test designs completely portable across different test development toolsets and execution environments.

The power of TDE comes from its integration of the above capabilities. Prior art methods and tools do not provide a completely visual system for working with test cases and scripts for GUI-based software.

In accordance with the present invention, from the perspective of a user, TDE has three main phases: 1) information capture; 2) design/edit of test cases; and 3) test script generation.

The *information capture phase,* phase 1 as referred to above, includes TDE's absorbing information about the GUI structure that has been captured by the capture/replay tool, and recording sequences of GUI interactions by the tester.

During the *design/edit phase,* (phase 2 as referred to above), the tester can generalize a single recorded interaction sequence to a scenario that represents a set of sequences. The possible operations include replacing a single user action with a set of actions, recording and inserting additional user actions into a sequence, inserting pre-defined test sequences from the test library into a sequence, and generalizing the data elements that appear in a recorded sequence.

During the *test script generation phase,* phase 3 as referred to above, the tester specifies which scenarios are to be transformed into sets of test scripts and defines parameters that control the number of scripts produced and the environment in which the scripts are to be run.

In the information capture phase, Figure 2 shows, in reference to an exemplary embodiment of the present invention, the steps carried out to record information about the SUT's GUI, and to produce the TDE representation for the tester. Within each step, the following operations occur:
Capture GUI information: the tested application and the Record/Replay tool are started. The tester 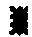 informs 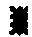 TDE what the windows of the application are, by sequentially opening and closing each one. As this tour of the SUT's windows goes n, TDE builds a script (in the language of the capture/replay tool) to visit each window and extract detailed information about the window's structure.
Transform captured GUI information to TDE representation: TDE creates the *Interactions Graph* showing the relations among the GUI's windows, and a simulation of each window to display in the Components Window.
Record user/system interactions: the standard mechanism of the capture/replay tool is used to record sequences of user/system interactions. The sequences are stored in the scripting language of the capture/replay tool.
Transform user/system interactions to TDE representations: the recorded sequences are converted into SPEs, which are then displayed graphically for the tester to edit in the Design/Edit phase.

In the Design/Edit Phase, see Figure 3, the tester works with scenarios and creates a *test design,* which can later be converted into executable test scripts by the Test Generator Engine. A test design can be built out of a recorded sequence of actions that has been converted into an SPE, or can be started from scratch. During the Design/Edit Phase, the tester can insert variational constructs, such as for example, *choose SPE* and *Data Variation* which represent a plurality of a test cases.

In the Test Script Generation Phase, TDE first converts the test design from SPE form into the type of input specification required by the test generator engine. The generator engine then parses the converted test design and produces test scripts that can be executed on the application by the capture/replay tool. The prototype version of TDE uses the TSL system as its generator engine. See TSL User Guide and Reference Manual Version 3.0, Siemens Corporate Research,1994. The data variation objects, preconditions and constraints of an SPE have natural counterparts in the TSL language.

As regards the TDE internal processing, consider first the construction of the TDE displays. TDE uses information captured by the capture/replay tool to build two structures containing information about the structure of the GUI being tested. TDE constructs a GUI *object forest* and an *Opens Relation.* The GUI object forest is a collection of trees, each one representing the structure of all the objects within a single top level window of the GUI. A top-level window is a window that appears on the application's screen not contained in any other window. The root node of the tree for a top-level window represents the window itself. Nodes at level 1 represent objects directly contained in the window. In general, nodes at level i+1 represent objects that are directly contained in an object at level i. An edge leads from a level i node to all level i+1 nodes it contains.

The Opens relation describes the effect of each user action in terms of the top-level window(s) in the GUI that the action opens. The pair *(op, wind)* is in the relation if performing the op causes win to open. The relation is in general many-to-many, as a given window might be opened by various different operations, and a given operation could open several different windows.

Following creation of the GUI object forest and Open, TDE constructs internal representations of the Interactions Graph and the Components Window. To construct the Interactions graph, each root of a tree in the GUI object forest becomes a node. The edges of the Interactions Graph are inserted according to the Opens relation. The Components Window contains an image of the screen display of each window represented in the Interactions Graph. These images are constructed from the containment information in the GUI object forest. The exact location of most widgets in the windows is recorded by the capture/replay tool, and used to build the images in the TDE display.

The test scenario representation, creation, and editing are next considered. Scenario Path Expressions are defined according to the following simple grammar:

*SPE* ::= *action* | *sequence* | *alternative* | *repeat SPE-list* ::= *SPE* | *SPE-list , SPE action* ::= 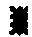 User action in GUI 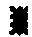 *sequence* ::= **SEQ** *SPE-list* **endSEQ** *alternative* ::= **ALT** *SPE-list* **endALT** *repeat* ::= **REP** *pos-integer* **SPE**

A 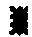 User action in GUI 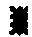 is any single user step that can be performed in the GUI. A *pos-integer* is a positive integer. The grammar uses **endSEQ** and **endALT** to prevent ambiguity. In the TDE display, a visual representation that differs from the syntax above is used to show SPEs. In particular, the elements of an SPE-list are displayed vertically without the comma separators, visual indentation is used to show the scope of **SEQ**, **ALT**, and **REP**, and the **endSEQ** and **endALT** delimiters are not used. For examples, see TDE: Test Development Environment for Cost-effective Testing of Software with Graphical User Interfaces, Siemens Corporate Research, Inc., Princeton, U.S.A., November 1996.

An SPE represents a set of sequences of user actions in the GUI, as follows:
1. if S = 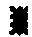 a 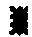 then S represents the set containing the single user action 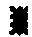 a 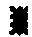
2. if S = **SEQ** S1 S2 ... Sn **endSEQ**, then S represents the set of sequences that consist of any sequence from S1, followed by any sequence from S2, ... followed by any sequence from Sn.
3. if **S = ALT** S1 S2 ... Sn **endALT**, then S represents the set of sequences that is the union of all sequences in S1, S2, ..., Sn.
4. if T = **REP** k S, then T represents the set of sequences of the form s1.s2...sk, where each si is a sequence in S.

It is noted that the grammar and its semantics differ from the standard grammar for regular expressions only in the repetition operator, which is limited to finite repetition.

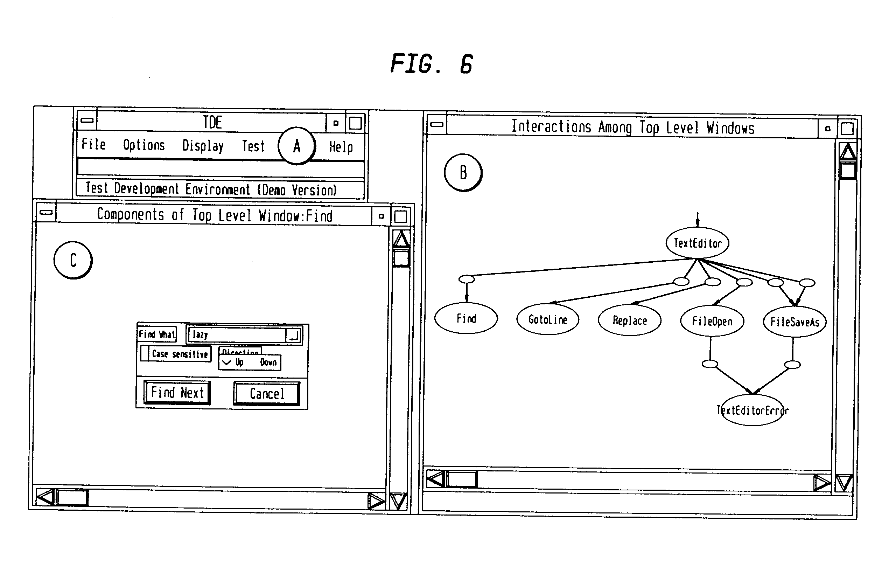

Fig. 5 shows the processing steps of TDE concerned with SPEs. The SPE Converter transforms scripts recorded by the capture/replay tool into internal SPE representations. Since a recorded script is a sequence of user actions, the resulting SPE is always a SEQ, of the form **SEQ** a b c ... The **SPE Editor** allows the tester to modify existing SPEs, as well as create new ones. The editor uses the information recorded in the Opens Relation to provide the connection between the objects of the GUI and operations on those objects. Since TDE allows different test generator engines, a **test design converter** exists as a bridge between the TDE SPE format, and each specific test generator engine. The converter for a given engine transforms SPEs into a test specification format that is suitable input for that engine.

Among the benefits of TDE, the following are summarized:
High-level representation for test sequences. Much of TDE's power comes from the SPE representation of tests. This representation allows visual editing and easy manipulation of test libraries, and makes it possible to carry out some automated updating of test scripts when the system interface is changed.
The TDE is easy to learn and use. Describing test scripts and design is based on using the application; the test designer does not have to learn a special test scripting language. Test structure and variations are described in a high-level, easy to understand graphical format. Test design and specification of test variations are done directly in terms of the application, making it quick and relatively inexpensive to develop comprehensive tests. Many changes to previously created test scripts can be done at a high level, using the TDE visual interface. Much of the tedious editing work necessary to change low-level scripts is avoided, and errors are less likely to be made.
Automated support for test updating: When changes are made to the design of the interface being tested, the existing test scripts must also be changed to remain usable. With existing CR tools, many of these changes must be accomplished by the labor-intensive process of direct editing of the recorded scripts. In TDE, a change to a component of the system interface can be tracked to the SPEs that refer to the changed component. TDE can automatically make certain SPE changes, which then will propagate to the test scripts generated from those SPEs.
As for integration with non-GUI testing, the testing of the application as well as the GUI are seamlessly integrated into test scenarios. Test coverage is measured and displayed in terms of user-level operations in the application.

Certain terms are used consistently herein with the following meanings.
**software under test (SUT)**: the application software which is being tested.
**user**: a user of the software under test.
**tester**: an individual who designs, develops, and runs tests. A user of testing tools.
**test script**: an executable sequence of actions that can be supplied as inputs to the SUT. It may contain one or more individual test cases.
**(test) scenario**: a high-level description of actions that could be performed by the SUT. A test scenario can be converted into a test script by adding whatever details are needed for the SUT to actually execute it.
**scenario group**: a generalized test scenario, which is an SPE and which may have variations in its control flow and its data items. Control flow variations allow branching (or alternate paths) in a scenario. Data variations allow a data item to take on one of a set of possible values.

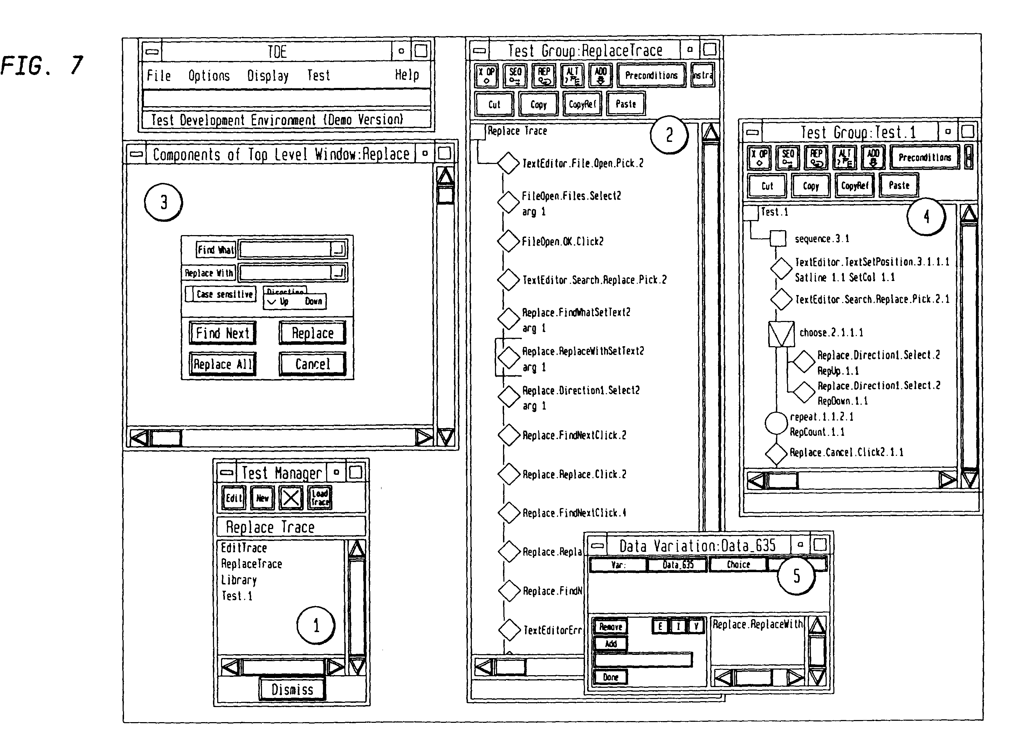

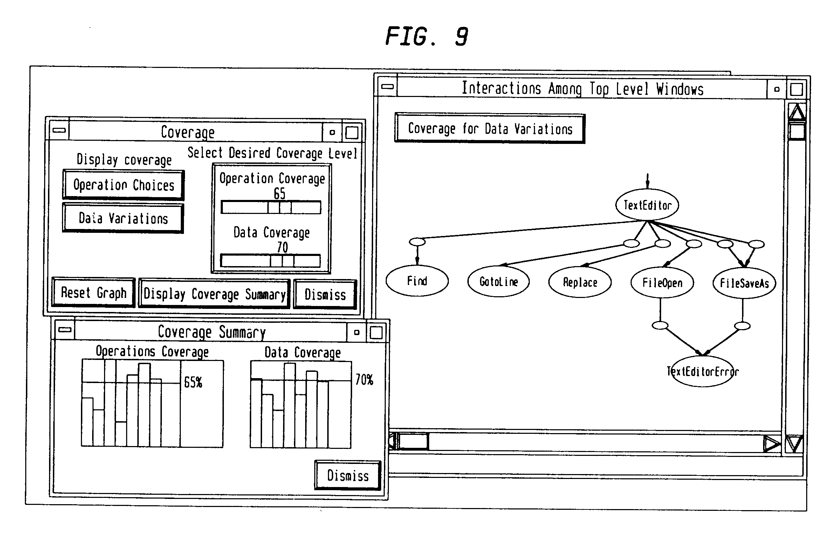

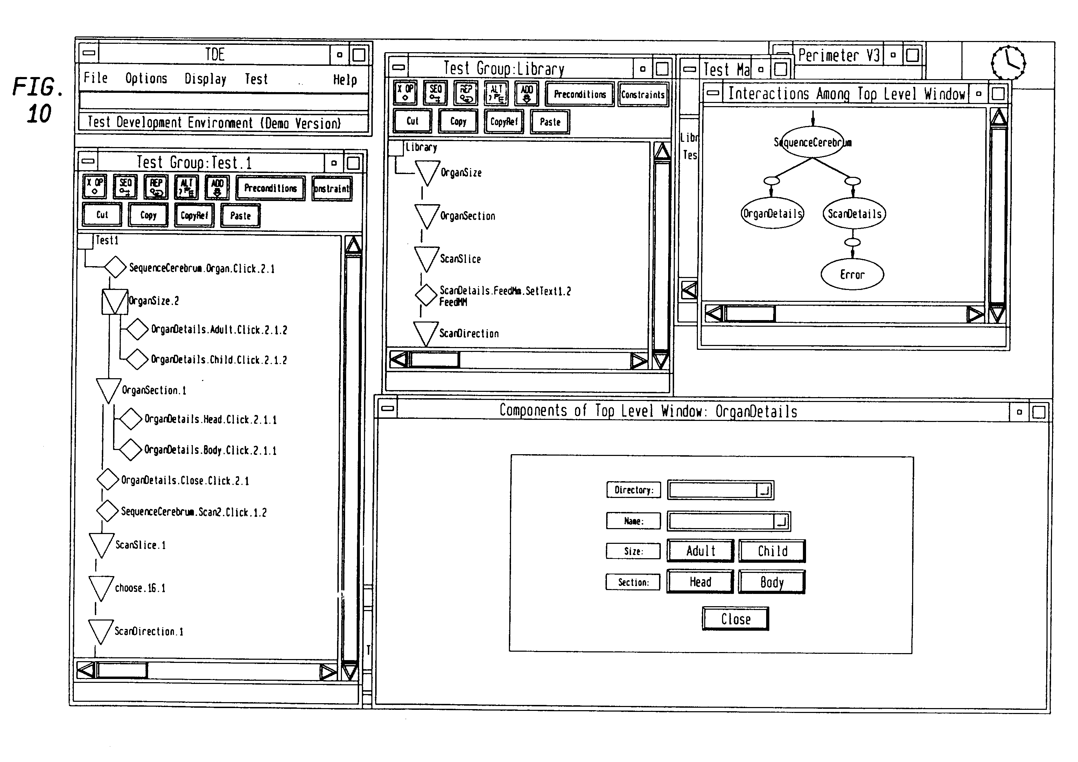

In operation, the TDE is described as follows. Figures 6,7,8, and 9 show elements of the current TDE prototype. Figure 6 has the windows containing the TDE representation of the SUT. Figures 7, 8, and 10 show the tools used to develop test scenarios and scenario groups. Fig. 9 shows the TDE test coverage display. Throughout the example, a simple Text Editor application is used to illustrate the features of TDE.

The TDE representation the Software under Test (SUT) will next be described. Figure 6 shows TDE's *Control Panel* (A), *Interactions Window* (B), and *Component Window* (C). The Interactions window contains the *Interactions graph,* in which each node (large oval) represents one of the SUT's windows. An arrow from one node to another node means that some user operation (such as a button click, a menu selection, or a Return) performed in the first window can open the second window. The Component window is used to display TDE-built images of the actual windows of the SUT's GUI. A window's image appears in the Component window when the tester clicks on that window's node in the Interactions graph.

The Interactions graph and the Component representations are created from information about the GUI that is collected by TDE during its *initial capture* phase. This phase requires a tour of the interface, i.e., successively invoking each window. In a TDE prototype that was constructed, this is done manually; in production versions the process will be automated.

Visualizing and Creating Scenarios will next be described. Figure 2 shows TDE's Test Manager (1), which is used to create new scenarios and edit existing scenarios. TDE representations of scenario groups can be seen in windows (2) and (4). Window (2) contains the single scenario that was produced by TDE from one sequence of user actions that was originally captured by the record/replay tool. Each diamond-shaped box represents a single user action.

Once it has been recorded and converted to a TDE scenario, this sequence can become the basis for additional scenarios developed by the tester. TDE provides a visual correspondence between a scenario and the representation of the SUT's interface in the Component window (3). If the tester clicks on a step in the scenario, TDE highlights the corresponding action (button click, typing, menu selection, etc.) in the proper place in the Component window.

Steps for augmenting and modifying scenarios will next be described. Scenarios can be added to or generalized in TDE. New scenarios can be created and new steps can be added to a scenario merely by carrying out actions on the TDE representation of the SUT. Scenarios can be generalized by inserting *blocks* that indicate a *sequence, repeat,* or *choose* (**SEQ, REP, ALT**) of different actions. The sequence *block* contains a sequence of user operations. The *repeat* block is a shorthand way to indicate repeated execution of a sequence of steps in the scenario. The *choose* block includes a number of different possible action sequences that can occur at a given point. A choose block represents branching of control flow, and a scenario group, or SPE, that contains a choose would be transformed into more than one test script. Window (4) illustrates the symbols used for *sequence* (square), *choose* (triangle), and *repeat* (circle).
Working with a scenario in TDE is extremely simple, and does not require any knowledge of a record/replay tool's test scripting language. See, for example, TSL Test Specification Language User Guide, Version 3.0. Siemens Corporate Research, Princeton, NJ, 1995.

Any of the symbols, as well as a single user action, can be inserted anywhere into an existing test scenario. To modify a scenario, the tester first clicks on an element of the scenario, making it the current insertion point. In window (4), the insertion point is the *Choose* symbol. A symbol is inserted by clicking on its button in the tool bar at the window's top. An individual operation is inserted by simply carrying out the desired operation in the Component window, as if the tester were interacting with the application itself. Again, the tester needs no knowledge of the test scripting language. Scenarios can also be edited with typical edit operations like Cut, Copy, and Paste.

Proper selection of argument values is a major factor in defining effective test cases. TDE allows the tester to parameterize any element of the GUI that contains user-supplied information. Typical examples of such information are a *file name* in a SaveFile entry widget, a *specific choice* out of a list of radio buttons, and a *choice* selected out of the different elements of a listbox widget.

In the TDE visual representation of a scenario, parameterizable arguments to a user action are shown in smaller type under the text of the action. Clicking on an argument brings up a *Data Variation window* (5 in Figure 7) in which the tester can define various values for the argument. A value defined in the Data Variation window can itself be a parameter, with additional variations defined for it. Figure 8 shows the Data Variations window being used to define VAR1 in the displayed scenario, and a second window being used to define further variations for VAR2.

When individual test scripts are produced from a scenario, each different value for a given argument will be included in a separate script. The exact number of scripts produced from a scenario depends on various factors controlled by the tester, including the preconditions and constraints defined for the scenario. One possibility is that each different combination of argument values in the scenario is used in a separate script; in that case, if a scenario has three places with arguments defined, containing respectively 2, 3, and 5 argument values, then 30 scripts would be produced.

The test generator section of TDE employs a two-stage process to convert the scenario groups of a test design into executable test scripts for the SUT. First, a scenario group, or SPE, is transformed into input to a test generator tool, and second, the test generator tool produces the test scripts. This separation allows the TDE scenario representation to be independent of any specific test execution environment and makes scenarios portable across different operating systems and hardware platforms.

Evaluation of the thoroughness of test cases run on an application helps the tester decide if additional tests are needed, and is useful to help certify the quality of a product to outside organizations, such as customers and regulatory agencies. Because different software-producing groups will usually have different needs in presenting coverage data, TDE provides a set of basic coverage reporting structures that can be customized by the tester. The fundamental concept is to measure the extent to which test scripts exercise all the elements of a system's GUI.

TDE evaluates two forms of thoroughness for a set of test cases, one in terms of the operations that exist in the software's GUI, and one in terms of the set of data variations that the tester has defined. *Operation choices coverage* is the percentage of all possible user actions in the GUI that are exercised by the test cases. *Data variation coverage* is the percentage of all defined data values for the actions that occur in the test set that are actually used in the test cases. Operation use coverage is a broad measure of test adequacy, indicating whether any operations of the system have not been tested at all. Data variation coverage is a finer measure, indicating the extent to which the operations have been exercised.

Figure 9 shows the coverage display on the Text Editor. Each bar in the Coverage Summary window corresponds to one window of the SUT, and shows the percentage of either operation coverage or data coverage achieved for the window. The tester can select a *desired coverage level* for both Operations and Data; these minimum desired coverage percentages are shown as horizontal lines in the bar graphs, providing a quick view of which windows have not been adequately tested. In the Interactions graph, each node is colored according to whether or not the desired minimum coverage has been achieved for the window represented by that node.

Automated support for test updating will next be described. Keeping large quantities of test cases up-to-date with respect to changes in the system being tested is a major problem for test developers. A change in the SUT's interface might imply that new user operations become available, that some previous operations no longer exist, or that an existing operation is carried out in a different way or in another submenu.

In some cases the tester may wish to replace existing scripts with new scripts that carry out exactly the same tests as previously, except that necessary renamings have been made. In other cases, a system change might mean that an existing script is no longer meaningful, or that the set of existing scripts no longer thoroughly tests the system.

If test scripts are produced from a Record/Replay tool, the tester must maintain a large volume of scripts in an unfamiliar scripting language. Although some changes may require only modification of a few entries in a table, others may require detailed updates to all the relevant scripts.

TDE stores test information at a higher level in the scenario groups, and generates actual executable test scripts only after a scenario group has been edited to its final form. When the system interface changes, and necessitates a change to a scenario group, the change will, in general, propagate to many test scripts. Some simple changes to scenarios can be made automatically by TDE, while others need tester intervention, aided by information supplied by TDE. The following describes two examples of SUT changes, and how they are carried out in TDE.

Example 1: A button is renamed from *Dismiss* to *Exit.* With TDE, the tester loads the affected window into the Component display, sets the display to an Edit mode, and interactively changes the button name directly on the window. TDE then automatically takes care of making all needed changes to the scenarios that reference the button, to the Record/Replay tool's database, and to the executable test scripts that activate the button.

Example 2: The sequence of user actions needed to perform a single logical task is modified. Such a change can be carried out easily by TDE if the task is encapsulated in a separate block of actions, or in a separate 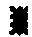 subscenario 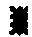 that is referenced in a larger scenario group. Only the affected scenario or block must be modified; the changes will carry through to any larger scenarios that refer to the affected ones.

Output Validation will next be described. Test results can be compared to expected results and verified at any point during execution of a script produced by TDE. *A validation block* can be inserted into test scenarios, in the same manner as *sequence, choose,* and *repeat blocks.* Validation blocks can contain references to previously computed and stored results, which could be used for comparison against the current state of the software. In general, any validations that can be done by the underlying Record/Replay tool can be inserted into a scenario. Simple examples of verifications are whether a particular menu is displayed, whether a window contains a particular text string, and whether a particular window is visible.

Expected output results can be described in several ways. First, the tester can directly capture the state of one or more objects in a window, and store the state in a validation block to use for comparison against actual results. Second, the tester can insert verification code into a validation block. Such code can be in any available scripting language of the tester's choice, or the scripting language of the underlying record/replay tool. Verification code can be used to perform comparisons, to carry out plausibility checks on the actual results, or to compute expected results for comparison.

In many cases a correct expected result can be easily determined from input data values that are specified in a data variation specification; the code in a Validation block can then refer to the data specification to help specify the correct response. Similarly, if an expected result in a test script depends on which of a set of alternatives of a choose block is taken, the validation code can refer to information in the choose block.

A third way to perform validation checking is to use an Exec block, which offers a command line interface where the results of an operation of the SUT can be checked, again in a scripting language of the tester's choice. For example, the existence of a file can be verified, and its contents can be compared to another file.

Integration with non-GUI testing is a factor to be considered. Much of the overall system testing that is external to the GUI can also be accomplished through TDE. Exec blocks can be used to validate the results of operations that do not modify the GUI. For example, the effect on a hardware test harness or a system database can be captured in an Exec block and checked in a Validation block.

The strategy of testing might involve varying the environment or other forcing functions to the SUT before invoking the GUI. This strategy can be accommodated by preceding the GUI operations in the scenario with Exec blocks which have *data variations.* For example, the Exec block might send instructions to a hardware test harness and then invoke the GUI.

Custom widgets, that is, objects whose definitions and methods are not included in the standard vocabulary, can appear in a GUI. Because TDE's generated test scripts are interpreted by an underlying Record/Replay system, all commands in the scripts must be understood by that system. The commercial Record/Replay systems have a 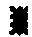 standard vocabulary 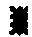 of widget classes that they recognize and whose operations they can execute. A Record/Replay tool can execute scripts with custom widgets after their operations have been defined to the tool. After such definitions have been made, TDE can be used to define scenarios that refer to custom widgets, and it will generate test scripts that can be properly interpreted by the Record/Replay tool.

TDE/GUI as a working prototype system that illustrates the concept of a visual test development system for creating tests for graphical interfaces, including the Interface, Test Manager, and Data Variations, has been run on a Sun workstation under Solaris 2.5, using QA Partner from Segue Software, Inc. as the underlying record/replay tool. See QA Partner and QA Planner User's Guide, Segue Software, Inc., Newton Centre, MA 1996. The system can be easily ported to Windows or to other platforms, and be integrated with any standard commercial record/replay tool.

The invention has been described by way of various embodiments. However it will be apparent to one of skill in the art that various changes, substitutions of equivalent functions and parts, and alterations, can be made without departing from the spirit of the invention. For example, it is possible to create a higher level operator which is implemented by low level descriptions such as **ALT**, **SEQ**, and **REP**. It will be understood that such changes and the like are intended to be within the scope of the claims following.

## Claims

1. An integrated visual test design method for graphical user interface (GUI) software, for linking a test designer, a test design library, and a test generation engine with a capture/replay tool, comprising the steps of:
capturing sequences of user/system interactions with software under test;
visually manipulating said sequences;
creating test designs that represent multiple individual test sequences;
simulating windows of said software's GUI;
displaying said windows on an interface; and
displaying graphical representations of recorded test sequences and test designs.

2. An integrated visual test design method as recited in claim 1, including a step of converting said test designs into an input specification suitable for a test generator engine.

3. An integrated visual test design method as recited in claim 2, including a step of applying to a test generator engine said test designs converted into an input specification, for producing executable scripts.

4. An integrated visual test design method as recited in claim 2, including a step of applying to a test generator engine said test designs converted into an input specification for producing scripts executable by said capture/replay tool.

5. An integrated visual test design method as recited in claim 2, including a step of applying to a test generator engine comprising a TSL (Test Specification Language) system said test designs converted into an input specification, for producing executable scripts.

6. An integrated visual test design method as recited in claim 2, including a step of applying to a test generator engine comprising a TSL (Test Specification Language) system said test designs converted into an input specification, for producing scripts executable by said capture/replay tool.

7. An integrated visual test design method as recited in claim 1, wherein said step of visually manipulating said sequences comprises converting said sequences into *Scenario Path Expressions.*

8. An integrated visual test design method as recited in claim 7, wherein said step of visually manipulating said sequences comprises displaying said *Scenario Path Expressions* for editing.

9. An integrated visual test design method as recited in claim 8, wherein said step of visually manipulating said sequences comprises editing.

10. An integrated visual test design method as recited in claim 1, wherein said step of capturing sequences of interactions with software under test comprises the steps of:
starting said graphical user interface (GUI) software; starting said capture/replay tool; and
sequentially opening and closing said windows.

11. An integrated visual test design method as recited in claim 10, wherein said step of sequentially opening and closing said windows comprises the step of building a script to visit each of said windows and extract detailed information about said each window's structure.

12. An integrated visual test design method as recited in claim 11, wherein said script is in a language utilized by said capture/replay tool.

13. An integrated visual test design method as recited in claim 11, comprising the step of:
transforming said detailed information so as to create an *Interaction Graph* showing relationships among said windows; and
creating a simulation of each of said windows for display.

14. An integrated visual test design method as recited in claim 1, wherein said step of capturing sequences of user/system interactions with software under test comprises:
utilizing a standard mechanism of said capture/replay tool to record said sequences of interactions; and
storing said sequences.

15. An integrated visual test design method as recited in claim 14, wherein said step of storing said sequences comprises storing said sequences in a scripting language of said capture/replay tool.

16. An integrated visual test design method as recited in claim 15, comprising the steps of:
converting said recorded sequences into *Scenario Path Expressions;* and
displaying said *Scenario Path Expressions.*

17. An integrated visual test design method for graphical user interface (GUI) software, for creating a defined test development environment for linking a test designer, a test design library, and a test generation engine with a capture/replay tool, comprising the steps of:
capturing graphical user interface information;
transforming captured user interface information into a representation suitable for said test development environment;
storing a record of user/system interactions; and
transforming said record of user/system interactions into *Scenario Path Expressions.*

18. An integrated visual test design method as recited in claim 17, wherein said step of capturing capturing graphical user interface information comprises the steps of:
starting said graphical user interface (GUI) software; starting said capture/replay tool;
determining characteristics of windows of said software; and
storing said characteristics.

19. An integrated visual test design method as recited in claim 18, comprising the step of creating a simulation of each of said windows from said characteristics.

20. An integrated visual test design method as recited in claim 19, comprising the step of creating an *Interactions Graph* representing relationships between said windows and said simulations.

21. An integrated visual test design method as recited in claim 17, comprising the steps of:
recording sequences of user/system interactions by utilizing said capture replay tool; and
storing said sequences.

22. An integrated visual test design method as recited in claim 21, wherein said step of storing said sequences comprises storing said sequences in a scripting language of said capture replay tool.

23. An integrated visual test design method as recited in claim 21, comprising the steps of:
converting said sequences into *Scenario Path Expressions;*
displaying said *Scenario Path Expressions* for editing; and
editing.
